# EUROPÄISCHE PATENTANMELDUNG

(11) **EP 0 901 966 A1**
(43) Veröffentlichungstag der Anmeldung: **17.03.1999**
(21) Anmeldenummer: 98114682.2
(22) Anmeldetag: 05.08.1998
(51) Int. Cl.: B65B 21/06, B65B 59/00, B65G 19/22, B65G 47/28

(54) **Vorrichtung zum Verpacken einer Gruppe von Gegenständen**

(30) Priorität: 15.09.1997 DE 19740271
(71) Anmelder: 4P Nicolaus Kempten GmbH, D-87437 Kempten (DE); 4P EMBALLAGES FRANCE, F-60009 Beauvais Cedex (FR)
(72) Erfinder: Marceau, Daniel, 60009 Beauvais Cedex (FR); Pailley, Hervé, 60009 Beauvais Cedex (FR); Froideval, Patrik, 60009 Beauvais Cedex (FR)
(74) Vertreter: Hutzelmann, Gerhard

(57) **Zusammenfassung**

Vorrichtung zum Verpacken einer Gruppe von Gegenständen(1,11,21) wie z.B. Flaschen, Dosen, Bechern, Schalen od.dgl. in eine darüber zu faltende Umverpackung, wobei die Gegenstände aus einem endlos ankommenden Strang zu Gruppen zusammengefaßt und als Gruppe verpackt werden. Es sind an Ketten(33,34) oder dergleichen angeordnete Mitnehmer(2,3) vorgesehen, von denen wenigstens zwei an jedem Gegenstand(1,11,21) angreifen, wobei der Abstand der Mitnehmer(2,3) voneinander und zur Längsmittelachse der Gegenstandsreihe einstellbar ist.

## Beschreibung

Die Erfindung bezieht sich auf eine Vorrichtung zum Verpacken einer Gruppe von Gegenständen wie z.B. Flaschen, Dosen, Bechern, Schalen od.dgl. in eine darüber zu faltende Umverpackung, wobei die Gegenstände aus einem endlos ankommenden Strang zu Gruppen zusammengefaßt und als Gruppe verpackt werden.

Bei den bekannten Vorrichtungen dieser Art werden zum Bilden von Gruppen meist Schnecken oder Klemmbacken verwendet. Soll die Anzahl der Gegenstände einer Gruppe oder die Größe der Gegenstände geändert werden, so erfordert dies ein umständliches Auswechseln der Schnecken, Klemmbacken oder dergleichen.

Der Erfindung liegt die Aufgabe zugrunde, eine Vorrichtung der genannten Art so auszugestalten, daß ein einfaches Anpassen an unterschiedliche Anforderungen möglich ist.

Diese Aufgabe wird erfindungsgemäß dadurch gelöst, daß an Ketten oder dergleichen angeordnete Mitnehmer vorgesehen sind, von denen wenigstens zwei an jedem Gegenstand angreifen, deren Abstand voneinander und zur Längsmittelachse der Gegenstandsreihe einstellbar ist.

Diese Mitnehmer führen die Gegenstände exakt, so daß auch sehr hohe Beschleunigungen der Gegenstände möglich sind; durch ihre Einstellbarkeit können die Mitnehmer auf alle gängigen Größen der Gegenstände eingerichtet werden.

Als sehr vorteilhaft hat es sich erwiesen, wenn gemäß einer Ausgestaltung der Erfindung die Mitnehmer als Finger ausgebildet sind, die über Stelleinrichtungen in ihrer Längsrichtung verstellbar sind.

Dabei ist es besonders günstig, wenn die Stelleinrichtungen als Gewindespindeln ausgebildet sind.

Eine weitere vorteilhafte Ausgestaltung der Erfindung liegt darin, daß die Mitnehmer über Zwischenglieder an der Kette angeordnet sind, wobei an den Zwischengliedern eine Verstelleinrichtung zum Verstellen der Mitnehmer quer zur Kette angreifen.

Damit sind die Mitnehmer in beiden Achsrichtungen auf einfache Weise einstellbar.

Als sehr vorteilhaft hat sich eine weitere Ausgestaltung der Erfindung erwiesen, gemäß der am den Gegenständen zugeordneten Ende der Mitnehmer eine drehbar gelagerte Rolle angeordnet ist, welche gleichzeitig an zwei aufeinanderfolgenden Gegenständen angreift.

Dadurch ist ein sehr effektiver und gleichzeitig schonender Transport der Gegenstände sichergestellt.

Sehr günstig ist es auch, wenn gemäß einer Ausgestaltung der Erfindung ein Differentialgetriebe vorgesehen ist, über welches jeweils mehrere, einer Packung zugeordnete Mitnehmer in ihren jeweiligen Abständen verstellbar sind.

Hierdurch ist die Verstellung der Mitnehmer und Anpassung an andere Gegenstandsgrößen bzw. an eine andere zu verpackende Anzahl sehr rationell durchführbar.

Eine weitere vorteilhafte Ausgestaltung der Erfindung liegt darin, daß die Rolle an einem Kopfstück gelagert ist, das seinerseits in Maschinenrichtung verstellbar am Mitnehmer gelagert ist.

Zum Einstellen des Abstandes zwischen zwei aufeinanderfolgenden Mitnehmern brauchen dabei nur die Kopfstücke entsprechend eingestellt zu werden.

In der Zeichnung ist die Erfindung anhand von zwei Ausführungsbeispielen veranschaulicht. Dabei zeigen:
- Fig.1: eine einreihige Anordnung einer Gruppe von sechs Gegenständen, mit beidseitig an den Gegenständen angreifenden Mitnehmern,
- Fig.2: eine zweireihige Anordnung einer Gruppe von zwölf Gegenständen, die einen kleineren Durchmesser als die Gegenstände in Fig.1 aufweisen und
- Fig.3: eine Ansicht mehrerer Mitnehmer in Seitenansicht und in Draufsicht.

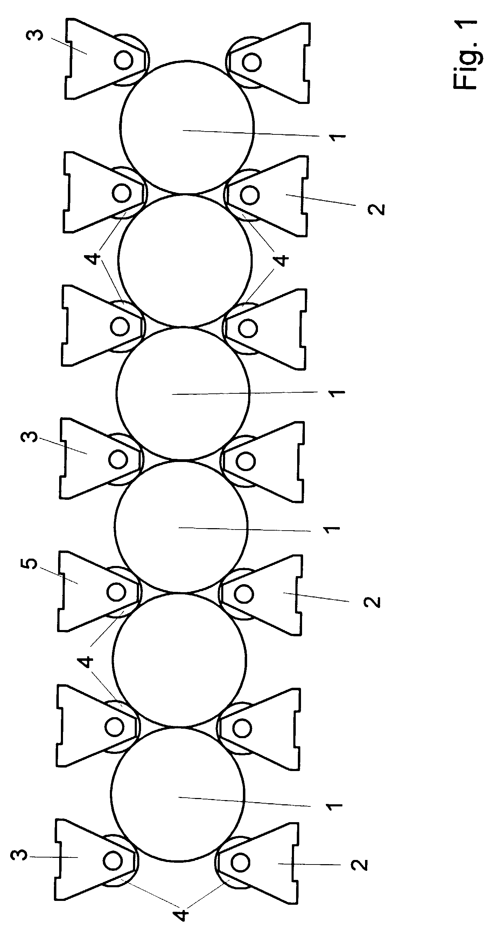

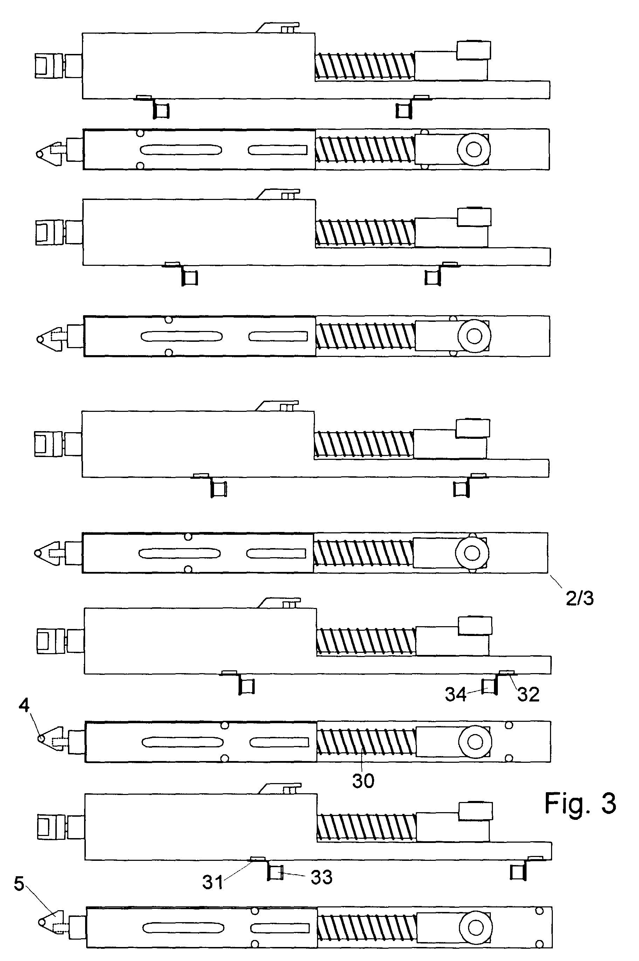

Mit 1 sind in Fig.1 sechs Gegenstände bezeichnet, die zu einer in einer Reihe angeordneten Gruppe zusammengefasst sind. An beiden Seiten eines jeden Gegenstandes 1 greifen Mitnehmer 2 bzw. 3 an, wobei an jeder Längsseite der Gegenstandsreihe jeweils zwei Mitnehmer pro Gegenstand vorgesehen sind. Bei den sechs Gegenständen der Gruppe greifen somit an jeder Seite sieben Mitnehmer 2 bzw. 3 an. An ihrem den Gegenständen 1 zugekehrten Ende der Mitnehmer 2 und 3 sind drehbar gelagerte Rollen 4 vorgesehen, mit denen die Mitnehmer an den Gegenständen angreifen. Die Rollen 4 sind in einem Kopf 5 gelagert, der seinerseits an einer in Fig.3 dargestellten Verstellspindel gelagert ist.

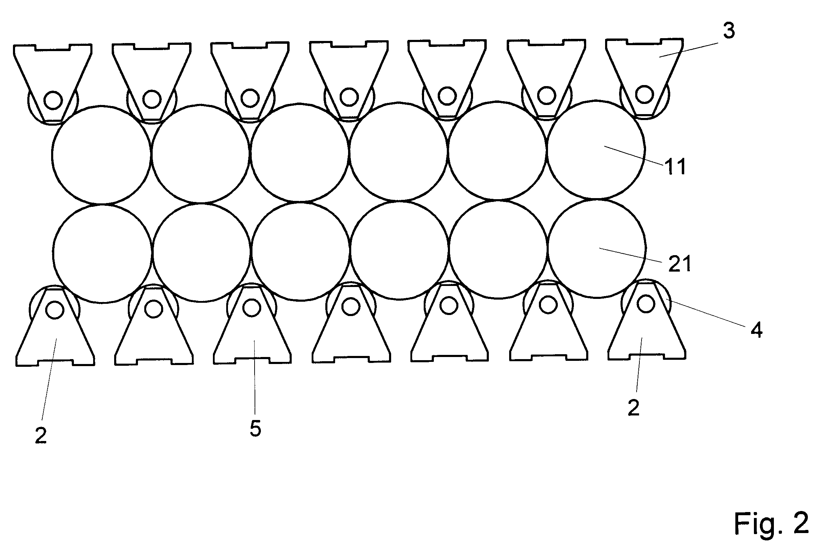

In Fig.2 ist ein Ausführungsbeispiel gezeigt, bei dem zwei Reihen von Gegenständen 11 bzw. 21 nebeneinander angeordnet sind. Beiden Reihen enthalten jeweils sechs Gegenstände 11 bzw. 21 die alle eng aneinander angelegt sind. Die Gegenstände 11 der einen Reihe werden von den Mitnehmern 3 und die Gegenstände 21 der anderen Reihe von den Mitnehmern 2 gestützt. Da die Gegenstände 11/21 einen kleineren Durchmesser aufweisen als die Gegenstände 1 ist auch der Abstand der Mitnehmer einer Reihe geringer und an diese Durchmesser angepaßt. Auch der Abstand der beiden Mitnehmer-Reihen ist sowohl an die unterschiedlichen Durchmesser als auch daran, daß zwei Reihen von Gegenständen vorgesehen sind angepaßt.

In Fig.3 sind mehrere Mitnehmer 2,3 dargestellt, die eine Verstellspindel 30 aufweisen, an der Halter 31 und 32 befestigt sind, die ihrerseits an zwei Ketten 33 und 34 festgelegt sind. Durch die Spindel sind die Halter 31 und 32 in Längsrichtung des Mitnehmers und damit quer zu den Ketten verstellbar. Am Ende der Verstellspindel 30 ist das Kopfstück 5 quer zur Längsachse des Mitnehmers verstellbar angeordnet. Durch unterschiedliche Positionierung des Kopfstückes an der Spindel können die Abstände der Rollen 4 einer Mitnehmer-Reihe eingestellt werden.

## Patentansprüche

1. Vorrichtung zum Verpacken einer Gruppe von Gegenständen(1,11,21) wie z.B. Flaschen, Dosen, Bechern, Schalen od.dgl. in eine darüber zu faltende Umverpackung, wobei die Gegenstände aus einem endlos ankommenden Strang zu Gruppen zusammengefaßt und als Gruppe verpackt werden, **dadurch gekennzeichnet**, daß an Ketten(33,34) oder dergleichen angeordnete Mitnehmer(2,3) vorgesehen sind, von denen wenigstens zwei an jedem Gegenstand(1,11,21) angreifen, wobei der Abstand der Mitnehmer(2,3) voneinander und zur Längsmittelachse der Gegenstandsreihe einstellbar ist.

2. Vorrichtung nach Anspruch 1, **dadurch gekennzeichnet** daß die Mitnehmer(2,3) als Finger ausgebildet sind, die über Stelleinrichtungen in ihrer Längsrichtung verstellbar sind.

3. Vorrichtung nach Anspruch 2, **dadurch gekennzeichnet**, daß die Stelleinrichtungen als Gewindespindeln(30) ausgebildet sind.

4. Vorrichtung nach einem der vorhergehenden Ansprüche, **dadurch gekennzeichnet**, daß die Mitnehmer(2,3) über Zwischenglieder(31,32) an der Kette(33,34) angeordnet sind, wobei an den Zwischengliedern eine Verstelleinrichtung zum Verstellen der Mitnehmer(2,3) quer zur Kette angreifen.

5. Vorrichtung nach einem der vorhergehenden Ansprüche, **dadurch gekennzeichnet**, daß am den Gegenständen(1) zugeordneten Ende der Mitnehmer(2,3) eine drehbar gelagerte Rolle(4) angeordnet ist, welche gleichzeitig an zwei aufeinanderfolgenden Gegenständen angreift.

6. Vorrichtung nach einem der vorhergehenden Ansprüche, **dadurch gekennzeichnet**, daß ein Differentialgetriebe vorgesehen ist, über welches jeweils mehrere, einer Packung zugeordnete Mitnehmer(2,3) in ihren jeweiligen Abständen verstellbar sind.

7. Vorrichtung nach einem der vorhergehenden Ansprüche, **dadurch gekennzeichnet**, daß die Rolle(4) an einem Kopfstück(5) gelagert ist, das seinerseits in Maschinenrichtung verstellbar am Mitnehmer gelagert ist.
